# EUROPÄISCHE PATENTSCHRIFT

(11) **EP 0 561 791 B1**
(45) Veröffentlichungstag und Bekanntmachung des Hinweises auf die Patenterteilung: **17.08.1994**
(21) Anmeldenummer: 91918014.1
(22) Anmeldetag: 29.10.1991
(51) Int. Cl.: F02K 1/66, F02K 1/70

(54) **SCHUBUMKEHRVORRICHTUNG FÜR EIN PROPFANTRIEBWERK**
THRUST REVERSER FOR A PROPFAN ENGINE
DISPOSITIF D'INVERSION DE POUSSEE POUR UN TURBOPROPULSEUR PROPFAN

(30) Priorität: 13.12.1990 DE 4039810
(43) Veröffentlichungstag der Anmeldung: 29.09.1993
(73) Patentinhaber: MTU MOTOREN- UND TURBINEN-UNION MÜNCHEN GMBH, D-80976 München (DE)
(72) Erfinder: ROHRA, Alois, D-8000 München 90 (DE); TRACKSDORF, Peter, D-8038 Gröbenzell (DE)
(74) Vertreter: Baum, Wolfgang, Dipl.-Ing.
(86) Internationale Anmeldenummer: EP9102040
(87) Internationale Veröffentlichungsnummer: WO9210660

(56) Entgegenhaltungen:
- DE-A- 2 446 548
- GB-A- 861 819
- GB-A- 1 565 212
- GB-A- 2 070 691
- US-A- 2 570 629
- US-A- 4 802 629

## Beschreibung

Die Erfindung betrifft ein Propfan- oder Propellertriebwerk mit einem den Propfan- bzw. Propeller umgebenden Mantel, wobei zur Schubumkehr die Strömungsrichtung innerhalb des Mantelkanals mittels verstellbarer Fanschaufeln bzw. Propellerblätter umkehrbar ist und ein rückwärtiger Endbereich des Mantels beweglich ausgebildet ist.

Insbesondere bezieht sich die Erfindung auf sogenannte "UHB-Flugtriebwerke" (UHB = "Ultra-High-Bypass"), also Triebwerke mit sehr hohem Nebenstromverhältnis (mindestens 10:1). Ein typisches Triebwerk dieser Kategorie weist zwei ummantelte gegenläufige Propfanrotoren auf. Zur Einhaltung eines optimalen Betriebspunktes während der unterschiedlichen Flugphasen sind die Schaufeln der Propfanrotoren in der Steigung verstellbar ausgeführt. Weiterhin wird durch eine entsprechende Rotorschaufelverstellung ein Pumpen des Verdichters vermieden.

Um die Landerollstrecke eines Flugzeuges möglichst kurz zu halten, verfügen heutige Flugtriebwerke über eine Schubumkehrvorrichtung. Hierzu offenbart die gattungsbildende DE-OS 24 46 548 die Schaufeln eines Gebläses bzw. eines Propfans in Umkehrstellung zu fahren; dabei wird die Luft zur Erzeugung eines Umkehrschubes um die Hinterkante des Mantels herum angesaugt und innerhalb des Mantelkanals nach vorn in Flugrichtung ausgeblasen.

Von entscheidender Bedeutung für die Bremswirkung bei Schubumkehr ist die Qualität der Hinterkantenumströmung des Mantels. Bei der, üblicherweise zur besseren Abströmung im Normalflugbetrieb, scharf ausgestalteten Hinterkante des Mantels führt die Umströmung bei Umkehrung der Strömungsrichtung zur Strömungsablösung und somit zu erheblichen Druckverlusten. Der zur Verfügung stehende maximale Umkehrschub vermindert sich dadurch unakzeptabel.

Bei dem in der vorgenannten Druckschrift bekannt gewordenen Triebwerk werden bei Schubumkehrbetrieb am Auslaß des Mantels angelenkte Klappen derart ausgeschwenkt, daß sie eine glockenförmige Einlaßöffnung formen. Der dadurch vergrößerte Einlaßquerschnitt soll eine verbesserte Strömung durch das Gebläse und somit einen größeren Umkehrschub bewirken. Eine Strömungsablösung bei der Umströmung der scharfen Klappenhinterkante mit der damit verbundenen Beeinträchtigung der Schubumkehrwirkung kann aber nicht verhindert oder eingeschränkt werden. Die durch die Strömungsablösung verursachte turbulente Anströmung der Rotorschaufeln kann zu einer gefährlichen Schwingungsanregung derselben führen.

Hiervon ausgehend besteht die Aufgabe der Erfindung darin, ein gattungsgemäßes Triebwerk derart auszubilden, daß die aerodynamischen Verluste bei der Umströmung des rückwärtigen Mantelendes im Schubumkehrbetrieb verringert werden und dadurch die Bremswirkung entsprechend verstärkt wird.

Erfindungsgemäß wird diese Aufgabe dadurch gelöst, daß bei einem gattungsgemäßen Triebwerk der rückwärtige Endbereich des Mantels als separat beweglicher Düsenring ausgebildet ist, welcher axial soweit verschiebbar ist, daß seine Hinterkante mit dem Ende des feststehenden Mantels einen abgestumpften Abschluß des den Propfan oder Propeller umgebenden Mantels bildet.

Die erfindungsgemäße und mit einfachen mechanischen Mitteln realisierbare variable Mantelgestaltung hat den Vorteil, daß durch die günstige aerodynamische Umströmung des abgestumpften rückwärtigen Mantelendes die Qualität der Strömung im Mantelkanal verbessert und somit die Gefahr einer Schwingungsanregung der Rotorschaufeln verringert wird. Zudem wird gleichzeitig eine ausreichende Luftversorgung des Kerntriebwerks gewährleistet.

In vorteilhafter Weiterbildung wird der verschiebliche Düsenring für die Schubumkehrposition axial in eine ringförmige Tasche des Mantels hineingefahren. Diese Ausführung zeichnet sich durch seine einfache und leichte Bauweise aus. Dadurch, daß der Düsenring aus einem Bauteil gebildet wird, bleibt der Wartungsaufwand gering. Eine hohe Zuverlässigkeit ist somit gewährleistet.

In alternativer Ausführung besteht der Düsenring aus mehreren Ringstücken. Somit ist es möglich, die Ringstücke bezüglich des feststehenden Mantels mit Hilfe von Schwenkhebeln axial vorwärts und radial soweit nach außen zu verschieben, daß die Hinterkanten der Ringstücke mit der Hinterkante des feststehenden Mantels einem stumpfen, die Umströmung begünstigenden Abschluß bildet. Als vorteilhaft erweist sich hierbei der höhere Luftwiderstand des Mantels bei ausgefahrenen Ringstücken, ohne daß dabei der maximale Durchmesser, welcher die Bodenfreiheit bei flügelmontierten Triebwerken verringern würde, wesentlichen größer wird.

Eine weitere Schubumkehr- und Brenswirkung wird mit einer anderen, alternativen Ausführung erzielt, bei welcher das rückwärtige Ende des Mantels als in seperate Ringstücke unterteilter, beweglicher Düsenring ausgebildet ist und die einzelnen Ringstücke mit Hilfe ihrer Schwenkhebel axial vorwärts und radial nach außen, sowie unter Drehung um ihre körperfeste und senkrechte zur translatorischen Bewegungsebene stehende Achse in eine solche Stellung bewegbar sind, daß sie in ihrer ausgefahrenen Endstellung eine vom rückwärtigen Ende des feststehenden Mantels abgesetzte, gegenüber der äußeren Luftströmung angestellte Lage einnehmen, wobei die Hinterkante des jeweiligen Ringstücks auf das Kerngehäuse weist.

Hierdurch bildet im ausgefahrenen Zustand die Innenseite der Ringstücke mit der Außenseite des Mantels Strömungskanäle, welche die Luftströmung in aerodynamisch günstiger Weise um das rückwärtige Ende des Mantels führt.

In weiterer Ausbildung der Erfindung ist vorgesehen, schwenkbare Klappen abschnittsweise am Umfang des Mantels anzuordnen, die im ausgefahrenen Zustand nicht nur die Umströmung des rückwärtigen Mantelendes begünstigen, sondern die Stirnfläche des Triebwerks und somit die Bremswirkung vergrößert. Ursache für die günstige Umströmung ist der sich an der rückwärtigen Kante der Klappe ausbildende Ablösewirbel, welcher für das rückwärtige Mantelende abrundend wirkt. Die Umströmung erfolgt somit in einem größeren Radius, wobei die Gefahr eienr Ablösung vermindert wird.

In weiterer zweckmäßiger Ausbildung sind die Klappen mit dem Düsenring derart gekoppelt, daß ihre Bewegung gleichzeitig erfolgt. Hierdurch wird eine optimale Umströmungsqualität gewährleistet.

Um den Widerstand im Normalflug nicht negativ zu beeinflussen, schließt die Außenkontur der eingefahrenen Klappen eben mit der Außenkontur des Mantels ab.

In bevorzugter Ausbildung verläuft der Mantel kanal, welcher zwischen dem Kerngehäuse einerseits und der Innenseite des Mantels mit Düsenring andererseits gebildet wird, in Durchströmrichtung bei Schubumkehr, d.h., vorwärts, divergent. Durch das Einfahren des Düsenrings vergrößert sich der Eintrittsquerschnitt und verringert somit Strömungsverluste, die vom Erweiterungsverhältnis des Mantelkanals und der Strömungsmachzahl am Eintritt abhängen.

In weiterer Ausgestaltung ist eine wirkungsvolle Funktion des Schubumkehrers bei gleichzeitiger Betätigung der Schaufelverstellung mit der Verschiebung des Düsenrings gegeben.

Die Erfindung wird nachfolgend beispielhaft anhand der beigefügten Zeichnung näher erläutert. Dabei zeigt:
- Fig. 1: einen Längsschnitt durch ein Propfantriebwerk mit einteiligem Düsenring im Flugzustand,
- Fig. 2: das Propfantriebwerk gemäß Fig. 1 bei Schubumkehrbetrieb,
- Fig. 3: eine Gesamtansicht des Propfantriebwerks im Flugzustand gemäß Fig. 1,
- Fig. 4: das Propfantriebwerk gemäß Fig. 3 bei Schubumkehrbetrieb,
- Fig. 5: ein Längsschnitt durch den hinteren Bereich des Mantels mit Düsenring und Klappen im Flugzustand,
- Fig. 6: die Manteldüse gemäß Fig. 5 mit in Schubumkehrposition befindlichen Düsenring und Klappen,
- Fig. 7: Gesamtansicht des Mantels gemäß Fig. 6,
- Fig. 8: einen Längsschnitt durch ein Propfantriebwerk mit Düsenring, aus Ringstücken bestehend, im Flugzustand,
- Fig. 9: das Propfantriebwerk gemäß Fig. 8 mit in Schubumkehrposition befindlichen Ringstücken,
- Fig. 10: das Propfantriebwerk gemäß Fig. 8 in alternativer Ausführung,
- Fig. 11: das Propfantriebwerk gemäß Fig. 9 mit zur Luftführung ausgeschwenkten Ringstücken.

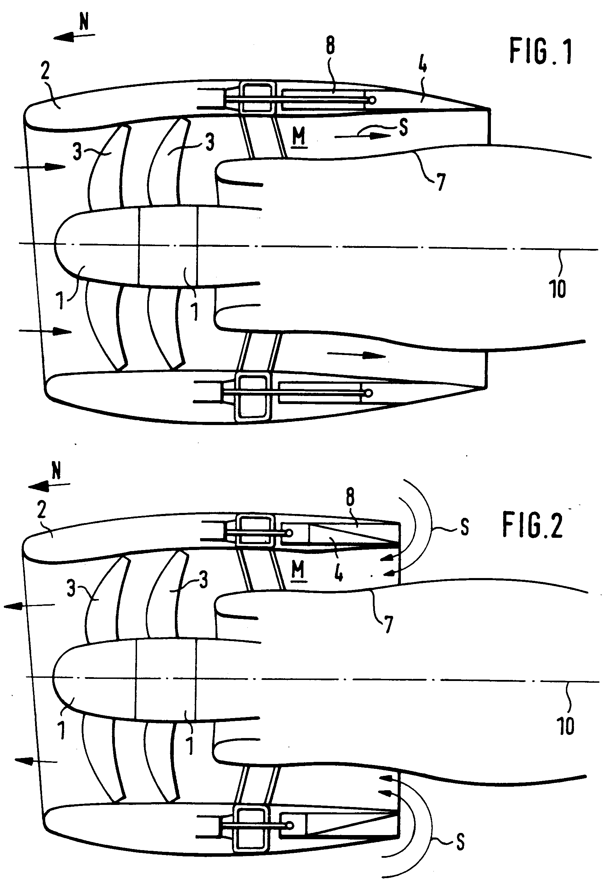

In Fig. 1 ist ein Propfantriebwerk zum Antrieb eines Flugzeuges im Axialschnitt dargestellt. Das Propfantriebwerk besteht im wesentlichen aus den beiden innerhalb des Mantels 2 befindlichen Propfanrotoren 1 mit ihren Rotorschaufeln 3, einer nicht näher dargestellten innenliegenden Gasturbine und einem, den Mantel 2 abschließenden Düsenring 4. Im Reiseflug beispielsweise, wird der Mantelkanal M, wie in Fig. 1 gezeigt, von vorne nach hinten durchströmt. Der Düsenring 4 befindet sich hierbei in ausgefahrener Position.

Zur Schubumkehr, um das Flugzeug abzubremsen, werden die Rotorschaufeln 3 gleichzeitig mit dem Düsenring 4 wie in Fig. 2 dargestellt in Schubumkehrposition gefahren. Dabei umströmt der Luftstrom S die Hinterkanten des Mantels 2, bevor er den Mantelkanal M nach vorne durchströmt.

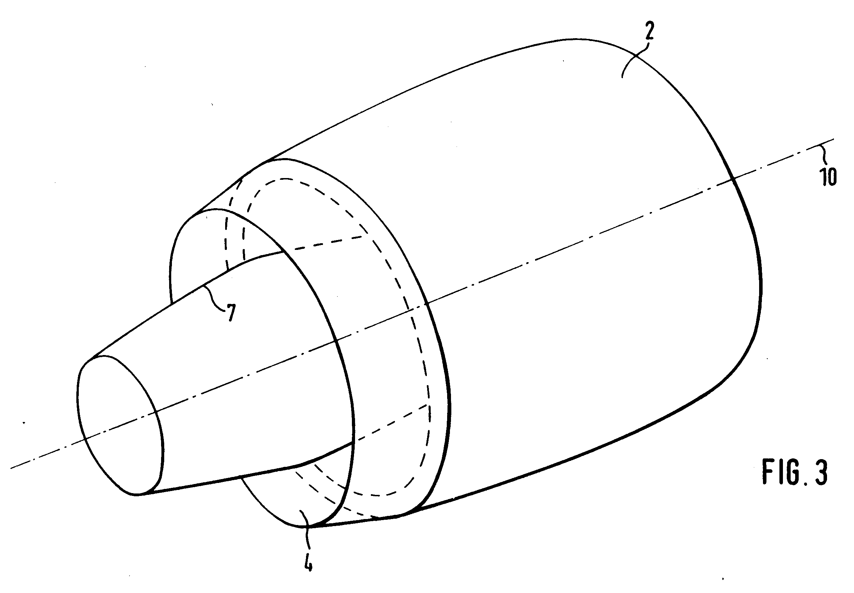

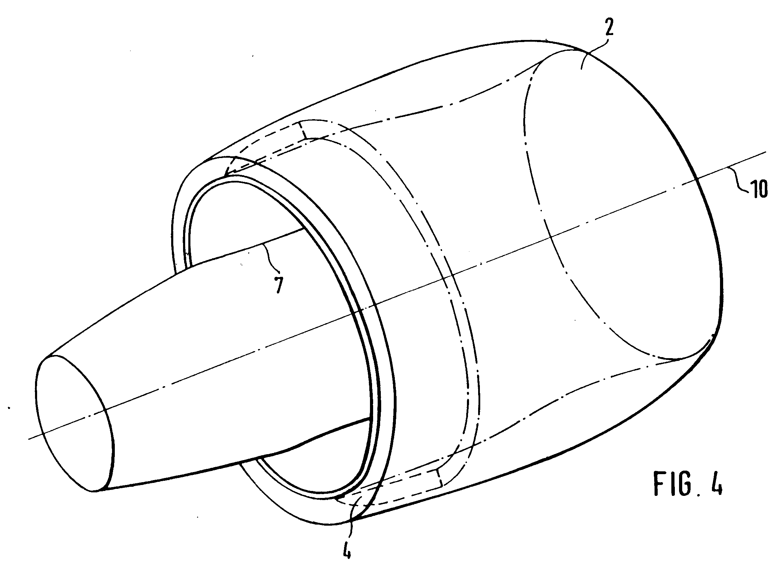

Den Fig. 3 und 4 kann die Flug- bzw. Schubumkehrposition des Düsenrings 4 in Schrägansicht entnommen werden.

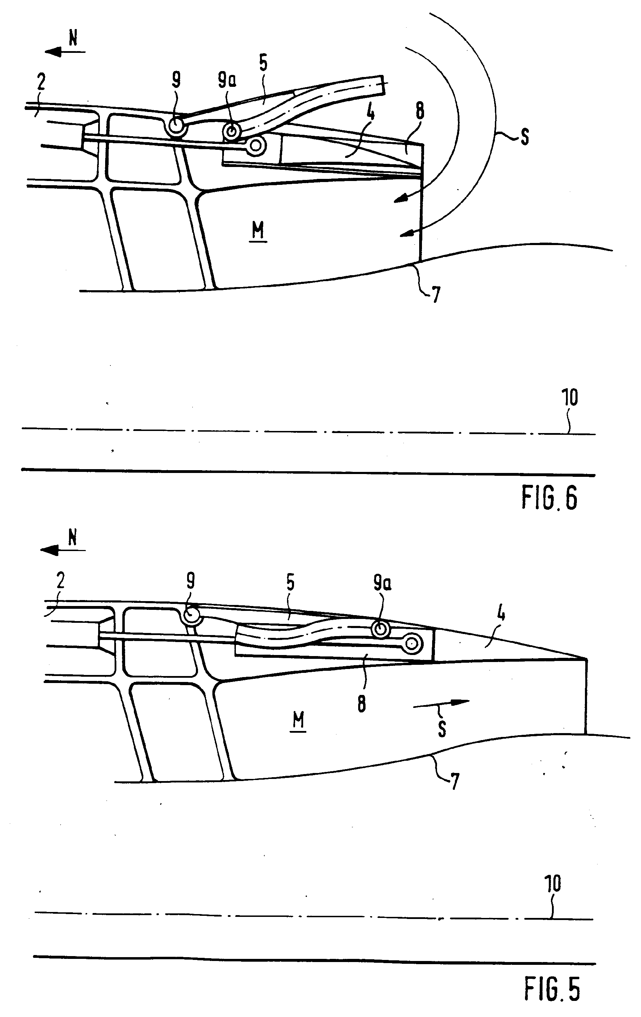

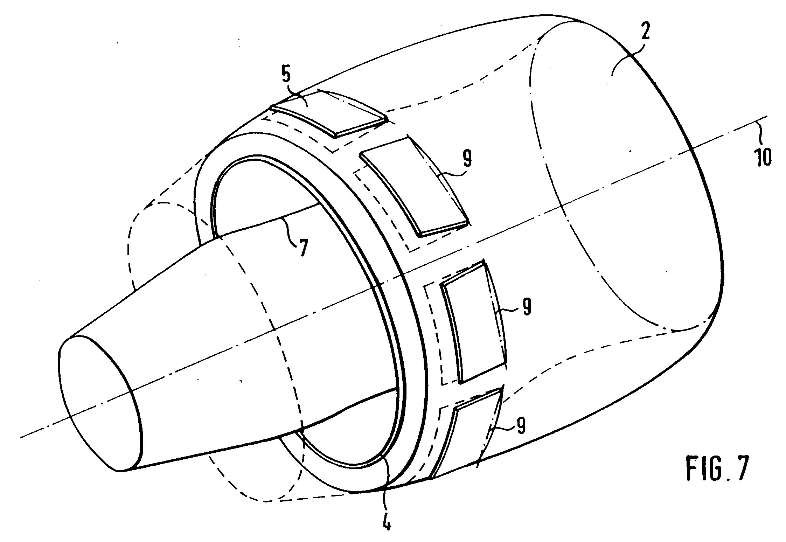

In alternativer Ausführung wird zur Verbesserung der Umströmung im Schubumkehrbetrieb gleichzeitig mit dem Düsenring 4 die Klappen 5 betätigt. Dabei schwenken die Klappen 5 um ihre Schwenkachsen 9 nach außen. Die Betätigung erfolgt über eine in der Klappe 5 befindliche Kulisse in der eine am Ringstück 6 gelagerte Rolle 9a abrollt und diese bewegt. Die Fig. 5 und 6 zeigen die Flugbetriebsstellung bzw. die Schubumkehrposition im Längsschnitt. Eine perspektivische Ansicht des Propfantriebwerks in der Schubumkehrkonfiguration ist in Fig. 7 dargestellt.

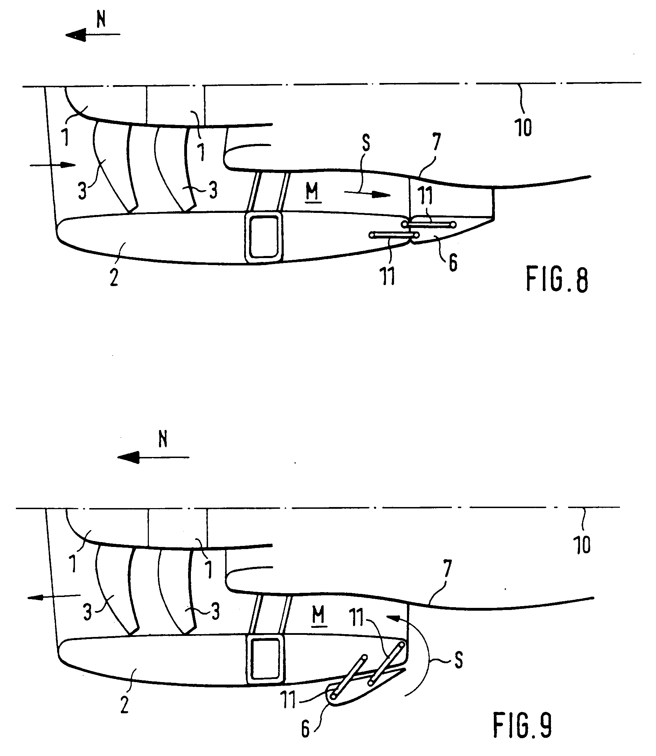

Eine weitere vorteilhafte Ausführung ist in den Längsschnitten der Fig. 8 und 9 erkennbar. Die Ringstücke 6, welche im Flugzustand den Düsenring gemäß Fig. 8 bilden, werden zur Schubumkehr mit Hilfe der Schwenkhebel 11 an die Außenseite des hinteren Mantels 2 geschwenkt. Dabei liegen die Ringstücke 6 in ihrer Endlage konzentrisch um den Mantel 2 an. Die Luftströmung S umströmt dann die Außenseite der Ringstücke 6 und das feststehende Ende des Mantels 2 gemäß Fig. 9.

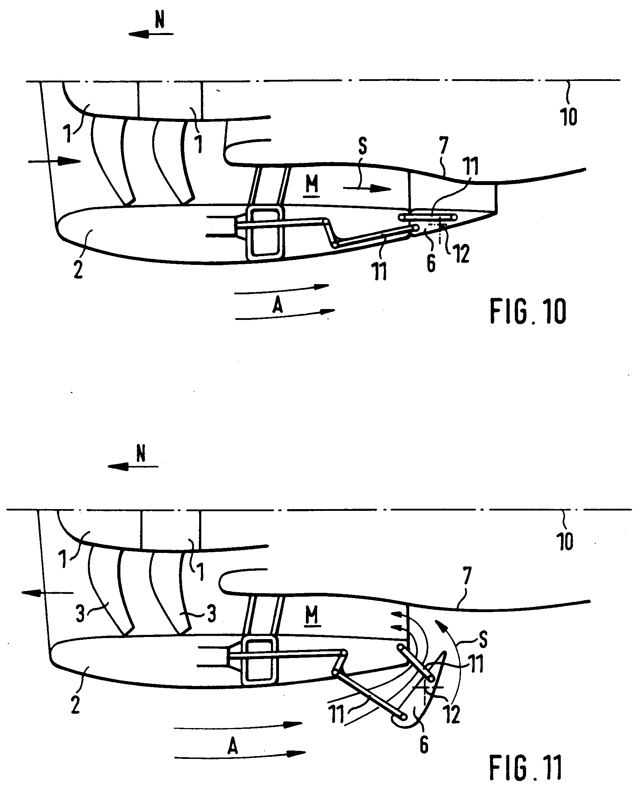

In Abwandlung der in den Fig. 8 und 9 ersichtlichen Ringstückpositionen, werden die Ringstücke 6 zur Schubumkehr in eine in Fig. 11 dargestellte Position gefahren, die einen, die Luftströmung S führenden, Strömungskanal zwischen dem Ende des Mantels 2 und der Innenseite der Ringstücke 6 bildet.

Fig. 10 zeigt hierzu wiederum die Position der Ringstücke 6 während des Fluges.

## Patentansprüche

1. Propfan- oder Propellertriebwerk mit einem den Propfan bzw. Propeller (1) umgebenden Mantel (2), wobei zur Schubumkehr die Strömungsrichtung innerhalb des Mantelkanals M mittels verstellbarer Fanschaufeln bzw. Propellerblätter (3) umkehrbar ist und ein rückwärtiger Endbereich des Mantels beweglich ausgebildet ist, dadurch gekennzeichnet, daß der rückwärtige Endbereich des Mantels (2) als separat beweglicher Düsenring (4) ausgebildet ist, welcher axial soweit verschiebbar ist, daß seine Hinterkante mit dem Ende des feststehenden Mantels (2) einen abgestumpften Abschluß des den Propfan oder Propeller (1) umgebenden Mantels (2) bildet.

2. Propfan- oder Propellertriebwerk nach Anspruch 1, dadurch gekennzeichnet, daß der Mantel (2) an seinem dem Düsenring (4) zugewandten Ende eine zum Düsenring (4) offene, ringförmige Tasche (8) aufweist, in welche der Düsenring (4) axial einfahrbar ist.

3. Propfan- oder Propellertriebwerk nach Anspruch 1 oder 2, dadurch gekennzeichnet, daß der Düsenring (4) aus mehreren Ringstücken (6) besteht.

4. Propfan- oder Propellertriebwerk nach Anspruch 3, dadurch gekennzeichnet, daß die Ringstücke (6) bezüglich des feststehenden Mantels (2) mit Hilfe von Schwenkhebeln (11) zusätzlich zur Axialbewegung radial verschiebbar sind.

5. Propfan- oder Propellertriebwerk mit einem den Propfan bzw. Propeller (1) umgebenden Mantel (2), wobei zur Schubumkehr die Strömungsrichtung innerhalb des Mantelkanals M mittels verstellbarer Fanschaufeln bzw. Propellerblätter (3) umkehrbar ist und ein rückwärtiger Endbereich des Mantels beweglich ausgebildet ist, dadurch gekennzeichnet, daß der rückwärtige Endbereich des Mantels (2) als in separate Ringstücke (6) unterteilter, beweglicher Düsenring (4) ausgebildet ist und die einzelnen Ringstücke (6) mit Hilfe ihrer Schwenkhebel (11) axial vorwärts und radial nach außen sowie unter Drehung um ihre körperfeste und senkrecht zur translatorischen Bewegungsebene stehende Achse (12) in eine solche Stellung bewegbar sind, daß sie in ihrer ausgefahrenen Endstellung eine vom rückwärtigen, abgestumpfte Ende des feststehenden Mantels (2) abgesetzte, gegenüber der äußeren Luftströmung (A) angestellte Lage einnehmen, wobei die Hinterkante des jeweiligen Ringstücks (6) auf das Kerngehäuse weist.

6. Propfan- oder Propellertriebwerk nach einem der vorhergehenden Ansprüche, dadurch gekennzeichnet, daß nach außen schwenkbare Klappen (5) abschnittsweise am Umfang des Mantels (2) verteilt angeordnet sind, wobei deren Schwenkachsen (9) zur Triebwerkslängsachse (10) querstehend, im Abstand zum rückwärtigen Ende des feststehenden Mantels (2) liegen und einen polygonalen Zug am Umfang des Mantels (2) bilden.

7. Propfan- oder Propellertriebwerk nach Anspruch 6, dadurch gekennzeichnet, daß der Düsenring (4) mit der Betätigung der Klappen (5) derart gekoppelt ist, daß sich der Düsenring (4) im Schubumkehrbetrieb in eingefahrener und die Klappen (5) in ausgefahrener Stellung befinden.

8. Propfan- oder Propellertriebwerk nach Anspruch 6 oder 7, dadurch gekennzeichnet, daß die Außenkonturen der Klappen (5) im eingefahrenen Zustand der Außenkontur des Mantels (2) folgen.

9. Propfan- oder Propellertriebwerk nach einem der vorhergehenden Ansprüche, dadurch gekennzeichnet, daß der Mantelkanal M, welcher zwischen dem Kerngehäuse (7) einerseits und der Innenseite des Mantels (2) mit Düsenring (4) andererseits gebildet wird, in Flugrichtung N divergent verläuft.

10. Propfan- oder Propellertriebwerk nach einem der vorhergehenden Ansprüche, dadurch gekennzeichnet, daß die Betätigung zur Verstellung der Rotorschaufeln (3) in Schubumkehrstellung mit der Betätigung zur Verschiebung des Düsenrings (4) gekoppelt ist.

## Claims

1. A prop-fan engine or propeller engine having a jacket (2) surrounding the prop-fan or propeller (1), wherein for the purpose of thrust reversal the direction of flow within the jacket channel M is reversible by means of adjustable fan blades or propeller blades (3) and a rearward end region of the jacket is constructed to be movable, characterized in that the rearward end region of the jacket (2) is constructed as a separately movable nozzle ring (4) which is displaceable axially far enough for its rear edge to form with the end of the fixed jacket (2) a blunted termination to the jacket (2) surrounding the prop-fan or propeller (1).

2. A prop-fan engine or propeller engine according to Claim 1, characterized in that the jacket (2) has, at its end facing the nozzle ring (4), an annular pocket (8) which is open to the nozzle ring (4) and into which the nozzle ring (4) can retract axially.

3. A prop-fan engine or propeller engine according to Claim 1 or 2, characterized in that the nozzle ring (4) comprises a plurality of annular sections (6).

4. A prop-fan engine or propeller engine according to Claim 3, characterized in that the annular sections (6) are displaceable radially relative to the fixed jacket (2) with the aid of pivotal levers (11), in addition to the axial movement.

5. A prop-fan engine or propeller engine having a jacket (2) surrounding the prop-fan or propeller (1), wherein for the purpose of thrust reversal the direction of flow within the jacket channel M is reversible by means of adjustable fan blades or propeller blades (3) and a rearward end region of the jacket is constructed to be movable, characterized in that the rearward end region of the jacket (2) is constructed as a movable nozzle ring (4) divided into separate annular sections (6), and the individual annular sections (6) are movable with the aid of their pivotal levers (11) axially forwards and radially outwards and by rotation about their body axis (12) which is perpendicular to the plane of translational movement, into a position such that they adopt, in their extended end position, a position which is set back from the rearward blunted end of the fixed jacket (2) and is incident with respect to the external air flow (A), the rear edge of the respective annular section (6) pointing towards the core housing.

6. A prop-fan engine or propeller engine according to one of the preceding claims, characterized in that outwardly pivotal flaps (5) are arranged distributed in portions on the periphery of the jacket (2), the pivot axes (9) thereof lying transversely with respect to the longitudinal axis (10) of the engine and spaced from the rearward end of the fixed jacket (2) and forming a polygon on the periphery of the jacket (2).

7. A prop-fan engine or propeller engine according to Claim 6, characterized in that the nozzle ring (4) is coupled to the actuation of the flaps (5) such that in thrust reversal operation the nozzle ring (4) is in the retracted position and the flaps (5) are in the extended position.

8. A prop-fan engine or propeller engine according to Claim 6 or 7, characterized in that the external contours of the flaps (5) follow the external contour of the jacket (2) in the retracted state.

9. A prop-fan engine or propeller engine according to one of the preceding claims, characterized in that the jacket channel M, which is formed between on the one hand the core housing (7) and on the other hand the inside of the jacket (2) with nozzle ring (4), diverges in the direction of flight N.

10. A prop-fan engine or propeller engine according to one of the preceding claims, characterized in that the actuation for adjusting the rotor blades (3) in the thrust reversal position is coupled to the actuation for the displacement of the nozzle ring (4).

## Revendications

1. Turbopropulseur propfan ou à hélices avec une enveloppe 2 entourant le propfan ou les hélices (1), le sens de l'écoulement, pour inverser la poussée, pouvant être inversé à l'intérieur du canal M formé par l'enveloppe au moyen d'aubes ou de pales d'hélices réglables et une zone terminale arrière de l'enveloppe étant constituée de façon mobile, caractérisé en ce que la zone terminale arrière de l'enveloppe (2) est constituée sous la forme d'une couronne directrice (4) mobile de façon séparée, qui peut être poussée axialement jusqu'à ce que son bord arrière forme avec l'extrémité de l'enveloppe fixe (2) une terminaison arrondie de l'enveloppe (2) entourant le propfan ou les hélices (1).

2. Turbopropulseur propfan ou à hélices selon la revendication 1, caractérisé en ce que l'enveloppe (2) présente à son extrémité tournée vers la couronne directrice (4) une poche (8) ouverte, de forme annulaire, dans laquelle on peut engager axialement la couronne directrice (4).

3. Turbopropulseur propfan ou à hélices selon la revendication 1 ou 2, caractérisé en ce que la couronne directrice (4) se compose de plusieurs pièces annulaires (6).

4. Turbopropulseur propfan ou à hélices selon la revendication 3, caractérisé en ce que les pièces annulaires (6) peuvent coulisser par rapport à l'enveloppe fixe (2) à l'aide de leviers de pivotement (11) radialement en plus de leur mouvement axial.

5. Turbopropulseur propfan ou à hélices avec une enveloppe 2 entourant le propfan ou les hélices (1), le sens de l'écoulement, pour inverser la poussée, pouvant être inversé à l'intérieur du canal M formé par l'enveloppe au moyen d'aubes ou de pales d'hélices réglables et une zone terminale arrière de l'enveloppe étant constituée de façon mobile, caractérisé en ce que la zone terminale arrière de l'enveloppe (2) est constituée sous la forme d'une couronne directrice (4) mobile, subdivisée en pièces annulaires séparées (6) et les différentes pièces annulaires (6) sont mobiles à l'aide de leurs leviers de pivotement (11) axialement vers l'avant et radialement vers l'extérieur ainsi qu'en tournant autour de leur axe (12) solidaire du corps et se trouvant perpendiculaire au plan du mouvement de translation et peuvent venir dans une position telle qu'elles prennent dans leur position finale de déploiement une position décalée à partir de l'extrémité arrière émoussée de l'enveloppe fixe (2) par rapport à l'écoulement extérieur (A) de l'air, le bord arrière de la pièce annulaire correspondante (6) étant tourné vers le carter central.

6. Turbopropulseur propfan ou à hélices selon l'une des revendications précédentes, caractérisé en ce que des volets qui peuvent pivoter vers l'extérieur (5) sont disposés par lots de façon répartie sur le pourtour de l'enveloppe (2), leurs axes de pivotement (9) se trouvant perpendiculaires à l'axe longitudinal du propulseur, à une certaine distance par rapport à l'extrémité arrière de l'enveloppe fixe (2) et formant une suite polygonale à la périphérie de l'enveloppe (2).

7. Turbopropulseur propfan ou à hélices selon la revendication 6, caractérisé en ce que la couronne directrice (4) est couplée à l'actionnement des volets (5) de telle sorte que la couronne directrice (4) se trouve lors du fonctionnement en inversion de poussée en position engagée et les volets (5) en position dégagée.

8. Turbopropulseur propfan ou à hélices selon la revendication 5 ou 7, caractérisé en ce que les contours extérieurs des volets (5) suivent en position engagée le contour extérieur de l'enveloppe (2).

9. Turbopropulseur propfan ou à hélices selon l'une des revendications précédentes, caractérisé en ce que le canal M formé par l'enveloppe, constitué entre le carter central (7) d'une part et la face intérieure de l'enveloppe (2) d'autre part avec la couronne directrice (4), s'étend de façon divergente en direction de vol.N

10. Turbopropulseur propfan ou à hélices selon l'une des revendications précédentes, caractérisé en ce que l'actionnement permettant de régler les aubes du rotor (3) est couplé dans la position d'inversion de la poussée à l'actionnement servant à faire coulisser la couronne directrice (4).
